# EUROPEAN PATENT APPLICATION

(11) **EP 1 610 273 A1**
(43) Date of publication of application: **28.12.2005**
(21) Application number: 04447151.4
(22) Date of filing: 25.06.2004
(51) Int. Cl.: G07F 7/10, G10L 17/00

(54) **Improved security device and terminal and method for communication between them**

(71) Applicant: STMicroelectronics Belgium N.V., 1930 Zaventem (BE)
(72) Inventor: Fontaine, Paul, 3020 Winksele (BE)
(74) Representative: Van Malderen, Joelle

(57) **Abstract**

The present invention is related to a device arranged for authorising the use of a selected function among at least two functions provided on the device. The device comprises storing means (1) for a function-specific voice pattern linked to the selected function and comparing means (2) arranged for comparing an external input signal with the function-specific voice pattern.

## Description

### Field of the invention

The present invention is related to an improved security device and method for communication between such device and a terminal.

### State of the art

Smart cards are used to improve security of functions like payments, access control, signatures and decryption. The smart cards ensure these functions can only be performed in the presence of a smart card because the smart cards contain one or more secrets (typically cryptographic keys) that are needed to successfully execute the functions.

To avoid the use of the smart cards by an illegitimate user, a passphrase that controls access to the smart card is used. The functions of the card are blocked as long as the passphrase is not validated by the smart card. The most commonly used passphrase for smart cards is a PIN. That PIN should be known by the cardholder only and is used by the card to verify the presence of the legitimate cardholder. The smart card has a mechanism to avoid an illegitimate user to guess the PIN. For example, after three successive bad PINs have been sent to the smart card, the smart card refuses to operate.

To avoid misuse of said secrets by a terminal in the absence of the card, these secrets are kept in the card and are never given to the terminal. The PIN only authorises the terminal to use card functions that use these secrets.

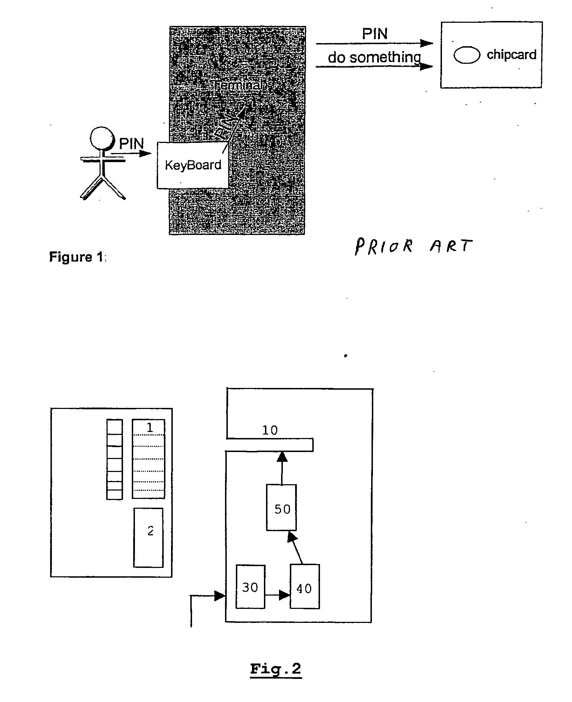

When entering the PIN on the keyboard of a terminal (this can be for example a PC, an EFT POS terminal or a bank terminal), it is read by the program running on the terminal and is sent to the smart card. The smart card can verify if the PIN is correct. If the PIN is accepted by the smart card, the terminal can use any smart card function (see Fig.1). As long as the PIN is not verified, asking the smart card for a function will fail.

Current smart cards can contain more than one function. It is the task of the terminal to make clear to the cardholder which function of the smart card will be used. It is also possible that the terminal asks the cardholder to select the function he wants to use. Example: a multi-function smart card can implement secure functions for access control and payments. When a cardholder wants access to a website with a smart card based access control function, he enters his smart card in a PC and enters his PIN. When the same user wants to make a payment, he uses the same smart card and PIN to authorise the payment.

The terminal may fool the cardholder by doing something different than expected. When the cardholder enters his PIN in the assumption that the terminal will use a specific function of the smart card, the terminal might very well be using another function of the smart card and executing an operation the user did not ask for. The cardholder may for example use his smart card and his PIN on a PC in an Internet café to gain access to his e-mail. The PC uses the smart card and the PIN to do a payment that the cardholder did not expect. This payment can even be done without informing the cardholder.

The risk for such a problem is important because the terminal does not belong to the cardholder and may be modified by whoever has access to the terminal and wants to commit fraud. A smart card however is easier to trust because it belongs to the cardholder and is designed to be difficult to modify.

A possible solution for the problem can be that each function on the smart cards has a different PIN. The user decides which function of the smart card he wants to use, and enters the PIN for this specific function. If the terminal uses the PIN with the wrong function of the smart card, the smart card will refuse it (because this function requires an different PIN). In this way a PIN is reserved to a function, and a terminal cannot use a function the user did not authorise. For example, the cardholder wants to access his e-mail using a PC. He enters PIN 1234 because this is the PIN linked to the e-mail access authorisation. The PC tries to perform a payment with the same PIN and card without approval of the cardholder, but the smart card refuses the transaction because PIN for a payment is different. Instead of reserving a different PIN for each function, a number of functions can also share the same PIN.

A major limitation of the above-mentioned solutions is that the cardholder has to remember many different PINs. In practice, the user will be tempted to use the same PIN instead of different values for many functions. An other limitation is that it increases the possibilities to guess a PIN : if a card has two different functions, each with a different PIN and three attempts on each PIN, the total number of PIN attempts to guess the PIN of a card becomes six instead of three.

Document EP-A-0 886 246 tackles more or less the same problem. It preferably makes use of a telephone line to transmit the voice signal. As opposed to the solution of the present invention it employs an external calculator to derive voice characteristics and check with the stored voiceprint. Similarly, in the approach of Feustel et al. (US-4827518) the comparison of spoken word and recorded pattern is performed on the terminal. Also in GB 2139389A the card reader and the comparator are united. In ES 21114493 and DE 19710664 the comparison takes place outside the smart card. In US patent US 4851654 the pronounced voice signal is processed on the smart card and subsequently output.

GB 2386803A discloses a system consisting of a token and a token reader. The comparison of stored pattern and pronounced sample can be performed by the token reader, but may alternatively also be performed within the token. It is mainly directed to the security of a digital signature.

In patent application WO 03/021539 A1 a portable device is disclosed that is arranged for comparing the detected signal characteristics with voice characteristics that are stored in a memory of the portable device. This portable device does not have the feature of multi-functionality. The device allows the selection of a function, as the memory may include preloaded voice sequences belonging to one or more legitimate users where each preloaded voice sequence corresponds to a command that is recognised by the processor. When the voice recognition code detects a match between a command spoken by a user and a sequence preloaded into the memory, the processor may execute a pre-defined sequence or task corresponding to the command. This feature of selecting a function in a device using pattern recognition is however not used in present invention.

### Aims of the invention

The present invention aims to provide an improved security device for selective authorisation of functions which will avoid the use by an illegitimate user. In a second object it aims to provide a terminal unit for communicating with such a device. In a further object the invention relates to a method for communication between such a device and such a terminal.

### Summary of the invention

The present invention relates to a device arranged for authorising the use of a selected function among at least two functions provided on the device. The device comprises storing means for a function-specific voice pattern linked to the selected function and comparing means arranged for comparing an external input signal with the function-specific voice pattern.

In a preferred embodiment the function-specific voice pattern corresponds to an identifier being a word, a combination of words or a phrase to be pronounced by a legitimate user of the device. Optionally the device comprises identifier storing means.

Preferably the device further comprises PIN code storing means for accessing a selected function provided on the device.

Advantageously the device further comprises additional passphrases storing means for accessing a selected function provided on the device.

In a typical embodiment the device is a smart card.

In a second object the invention relates to a terminal unit for communication with a device as described above, comprising receiving means arranged for receiving the device, selection means for selecting a function, voice message recording means, processing means for the recorded voice message and communication means for sending the processed message to the device.

Preferably the terminal unit further comprises function reading means for reading the at least two functions provided on the device. Optionally the selection means are for selecting a function among at least two functions.

In an advantageous embodiment the terminal unit further comprises identifier storing means, the identifier being a word, a combination of words or a phrase to be pronounced by a legitimate user.

The invention also relates to a communication system comprising a device as described above and a terminal unit as mentioned.

In another object the invention relates to a method for giving a user authorisation to use a selected function provided on a device as described above, the device being in communication with a terminal unit as described, comprising the steps of :
- receiving the device in a terminal unit,
- letting the user pronounce an identifier corresponding to the selected function (this may be on request of the terminal unit),
- processing the pronounced identifier,
- sending the processed identifier to said device,
- verifying on the device whether the processed identifier corresponds to the voice pattern specific for the selected function,
- granting authorisation to use the selected function in case of a positive verification, or denying access to the selected function in case of a negative verification.

In an alternative embodiment the method for giving authorisation further comprises the step of checking a PIN code to gain access to the selected function.

In a preferred embodiment the selected function is determined by said user (possibly on request of said terminal unit), after receiving said device. Alternatively the step of selecting is performed before the step of receiving the device.

In yet another embodiment the method for giving authorisation further comprises the step of checking additional passphrases to gain access to the selected function.

In a specific embodiment, the terminal unit may display the identifier corresponding to the function to be used. The terminal unit may obtain the identifier corresponding to the function to be used from the device.

In a further object the invention relates to a method for obtaining authorisation to use a function provided on a device as described above, the device being in communication with a terminal unit as described, comprising the steps of :
- entering the device into a terminal unit,
- selecting a function to be authorised,
- pronouncing (possibly on request of the terminal unit) an identifier corresponding to the selected function,
- after recognition of the voice pattern of the pronounced identifier by the device, obtaining authorisation to use the selected function.

Alternatively the method for obtaining authorisation further comprises the step of using a PIN code to gain access to the selected function.

In another embodiment the method for obtaining authorisation further comprises the step of using additional passphrases to gain access to the selected function.

### Short description of the drawings

Fig. 1 represents a prior art solution.

Fig. 2 represents a solution according to the invention.

### Detailed description of the invention

The invention proposes to use biometrics, and more in specific voice recognition, instead of (or in addition to) using a PIN to give access to a function on the smart card. Biometric voice recognition does not use the actual value of a spoken word, but the way it is pronounced by a specific person. This way the passphrase (being a pronounceable word) does not have to be secret. Someone else who can see or hear it is not capable of pronouncing it exactly the way the legitimate user pronounces it. Because the word itself is not secret, the protection lies in how the legitimate user pronounces it.

In the solution according to the invention as represented in Fig.2 each function of the smart card has a different voice pattern linked to it. For both the cardholder and the card this pattern represents a specific function. The cardholder is asked (explicitly or implicitly) to pronounce a word to gain access to a function. The smart card only allows the function after recognition of a voice pattern linked to the function. Example: when sending the spoken word 'signature' to a 'digital signature' function of a smart card, this gives access to this function, and cannot be used to obtain access to another function of the smart card.

The device handles secrets, typically cryptographic keys and is protected against disclosure of these secrets. The physical and logical protection mechanisms used for the secret protection can also be used to protect the function specific voice patterns in the device against modification.

The function specific voice pattern stored in the device must not be modifiable by an illegitimate person. The device therefore implements access control to the voice pattern storing means. A logical access control implementation may use one time programmable memory, so that the information cannot be modified after it has been written the first time. Another logical access control implementation may use authorisation control to write data in the device. The authorisation may be based on PINs, passwords, voice recognition and cryptography in any combination. A way to implement the physical access control is the use of chips for smart cards or USB security dongles.

The function specific voice patterns can be put in the device using numerous ways. It can be done during a registration process in a trusted environment where the legitimate user pronounces the required identifiers. A trusted terminal device processes the pronounced identifiers and communicates the result together with the required access control information to the device where the results can again be processed before being stored.

The invention does not use a biometric sensor (microphone) in the device itself to prevent fraud because this is difficult and expensive to manufacture and because it does not prevent the fraudulent use of recorded voice on stolen devices.

This approach has several advantages. The word that the cardholder is asked to pronounce can match the function that he wants to authorise. This is easy to explain to the cardholder and easy to remember for the cardholder. Further, the terminal cannot perform functions other than those authorised by the cardholder. Another practical advantage of having several functions on the same card is, from the user's point of view, that one does not need separate cards for various functions like electronic wallet, building access, digital signature etc...

Using this principle, instead of having to remember a PIN per function, the user has to remember an easy-to-remember word (e.g. the name of the function). The word corresponding to the function may be stored in the terminal. This makes it possible to show the word the user has to pronounce on the screen of the terminal. Another extension is to store the words to be pronounced in the smart card. This makes the terminals more independent. After a cardholder has selected a terminal function and inserted his smart card (in any order), the terminal may ask the card to provide the word corresponding to the function to the card. Imagine an e-mail terminal in an international airport. All users may understand English, but have a different word linked to a card function. When the cardholder inserts his smart card, the terminal asks the "text" corresponding to the e-mail function to the smart card. The smart card responds with "courriel" for a French customer and "brievenbus" for a Dutch customer. The terminal requests the cardholder to pronounce that text. By choosing words that mean something, the user is better capable of knowing exactly what will be done once he pronounces the passphrase (this means: which function he will open and what can be done with it).

As another example, the cardholder uses a PC mouse to instruct the PC he wants to access his e-mail. The PC asks him to pronounce "e-mail". The cardholder pronounces "e-mail". The PC transmits the processed voice recording and the e-mail function selection to the smart card. The smart card verifies that the "e-mail" recording corresponds to the "e-mail" pattern linked to its "e-mail" function. The card authorises the e-mail function of the card. In this example the terminal cannot perform a function different from e-mail if the cardholder did not pronounce the words corresponding to these functions.
Also, recorded voice samples cannot be used for all functions of the card. In order to prevent illegitimate use of voice recordings, users can refrain from pronouncing certain words in an environment they don't trust. E.g. they don't pronounce the word 'signature' outside the office in order to prevent the use of the signature function even if the card is used (and the voice recorded), then stolen outside the office.

The word may be replaced with a combination of words or a phrase. When a user pronounces 'Purse load', the terminal converts the spoken word into digital format and sends it to the Purse Load function in a smart card. The Purse Load function verifies if this password is really 'Purse Load' pronounced by the legitimate user. If so, the Purse application can be used. If the verification fails, the Purse Load function remains closed.

In addition to the voice patterns of each card function, a PIN can be used. Since PIN and voice recognition serve different purposes, it can be explained to cardholders that they need both a PIN and a voice pattern to access functions. Since the PIN increases the authorisation confidence, the recognition requirements can be lowered, thus lowering false rejection.

In another embodiment additional passphrases are used for one function. Each passphrase imposes specific limits where the function allows to do so. An example of this is the signing money transfer function. The problem is again the same: the user does not see what happens inside the terminal. If he wants to transfer 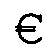 1000, he can give his voice passphrase for the money transfer function, e.g. 'Money Transfer'. The terminal sends this spoken password to the smart card, and has access to the money transfer function, but there is no proof that because the terminal shows on the screen ' 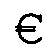 1000', that this amount is actually sent to the smart card. A fraudulent terminal can ask the smart card for a money transfer of 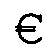 100.000. The solution is to give the same smart card function more than one passphrase. In our example with the money transfer function this can be:
- 'Money Transfer'
- 'Money Transfer maximum one thousand'
- 'Money Transfer maximum one million'
Depending on which passphrase is received, the function only allows money below a specific amount (in our example, the first password allows only money transfers smaller than 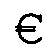 100 (the default), the second one smaller than 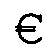 1000, the third smaller than one million).

## Claims

1. Device arranged for authorising the use of a selected function among at least two functions provided on said device, said device comprising storing means (1) for a function-specific voice pattern linked to said selected function and comparing means (2) arranged for comparing an external input signal with said function-specific voice pattern.

2. Device as in claim 1, wherein said function-specific voice pattern corresponds to an identifier being a word, a combination of words or a phrase to be pronounced by a legitimate user of said device.

3. Device as in claim 2, further comprising identifier storing means.

4. Device as in any of the previous claims, further comprising PIN code storing means for accessing a selected function provided on said device.

5. Device as in any of the previous claims, further comprising additional passphrases storing means for accessing a selected function provided on said device.

6. Device as in any of the previous claims, said device being a smart card.

7. Terminal unit for communication with a device as in any of the previous claims, comprising receiving means (10) arranged for receiving said device, selection means for selecting a function, voice message recording means (30), processing means (40) for said recorded voice message and communication means (50) for sending said processed message to said device.

8. Terminal unit as in claim 7, wherein said selection means are for selecting a function among at least two functions.

9. Terminal unit as in claim 7 or 8, further comprising function reading means for reading said at least two functions provided on said device.

10. Terminal unit as in claim 7, 8 or 9, further comprising identifier storing means, said identifier being a word, a combination of words or a phrase to be pronounced by a legitimate user.

11. Communication system comprising a device as in any of claims 1-6 and a terminal unit as in any of claims 7-10.

12. Method for giving a user authorisation to use a selected function provided on a device according to any of claims 1 to 6, said device being in communication with a terminal unit as in any of claims 7 to 10, comprising the steps of :
- receiving said device in said terminal unit,
- letting said user pronounce an identifier corresponding to said selected function,
- processing said pronounced identifier in said terminal unit,
- sending said processed identifier to said device,
- verifying on said device whether said processed identifier corresponds to the voice pattern specific for said selected function,
- granting authorisation to use said selected function in case of a positive verification, or denying access to said selected function in case of a negative verification.

13. Method for giving authorisation as in claim 12, further comprising the step of checking a PIN code to gain access to said selected function.

14. Method for giving a user authorisation to use a selected function as in claims 12 or 13, whereby said selected function is determined by said user, after receiving said device.

15. Method for giving a user authorisation as in claim 14, wherein the step of selecting is performed before the step of receiving said device.

16. Method for giving authorisation as in any of claims 12 to 15, further comprising the step of checking additional passphrases to gain access to said selected function.

17. Method for obtaining authorisation to use a selected function provided on a device according to claim 1, said device being in communication with a terminal unit as in any of claims 7 to 10, comprising the steps of :
- entering said device into said terminal unit,
- pronouncing an identifier corresponding to said selected function,
- after recognition of the voice pattern of said pronounced identifier by said device, obtaining authorisation to use said selected function.

18. Method for obtaining authorisation to use a selected function as in claim 17, wherein said selected function to be authorised is determined on request of said terminal unit.

19. Method for obtaining authorisation as in claim 17 or 18, further comprising the step of using a PIN code to gain access to said selected function.

20. Method for obtaining authorisation as in any of claims 17 to 19, further comprising the step of using additional passphrases to gain access to said selected function.
